# EUROPEAN PATENT SPECIFICATION

(11) **EP 2 784 306 B1**
(45) Date of publication and mention of the grant of the patent: **26.10.2016**
(21) Application number: 14153789.4
(22) Date of filing: 04.02.2014
(51) Int. Cl.: F03D 80/00

(54) **Cooling device for a wind turbine generator**
Kühlvorrichtung für eine Windenergieanlage
Dispositif de refroidissement pour une éolienne

(30) Priority: 28.03.2013 JP 2013069202
(43) Date of publication of application: 01.10.2014
(73) Proprietor: Mitsubishi Heavy Industries, Ltd., Tokyo 108-8215 (JP)
(72) Inventor: Kamibayashi, Masakazu, Tokyo, 108-8215 (JP); Fujioka, Yoshihiro, Yokohama-shi, 231-8715 (JP)
(74) Representative: Intès, Didier Gérard André

(56) References cited:
- WO-A1-2013/021670
- WO-A2-2010/086362
- US-A1- 2010 127 502
- US-A1- 2011 272 949

## Description

### Technical Field

The present disclosure relates to a wind turbine generator equipped with a cooling function for cooling devices installed in a nacelle (e.g. a generator, a hydraulic transmission, a transformer, a converter, a control circuits, etc).

### Background Art

From the perspective of preserving the global environment, wind turbine generators which utilize wind power in a form of renewable energy have become popular in recent years. Wind turbine generators have been increased in size to improve power generation efficiency. Wind turbine generators installed offshore, in particular, tend to be high in installation cost compared to wind turbine generators installed onshore, and thus it is desired to improve power generation efficiency by increasing its size and hence to improve profitability.

With increased output of a generator due to increased size of the wind turbine generator, heat radiation amount from the generator increases as well. Further, in a wind turbine generator which transmits rotation of a rotor to a generator by a hydraulic transmission combining a hydraulic pump and a hydraulic motor, not only the heat radiation from the generator but also heat radiation from the hydraulic transmission needs to be considered. Therefore, it is desired to develop a wind turbine generator equipped with an efficient cooling function for devices such as a generator and a hydraulic transmission.

In this respect, Patent Reference 1 describes a wind turbine generator equipped with a cooling system for cooling coils of a generator. This cooling system is configured to cool the coils of the generator using ambient air introduced into a cooling duct from an inlet port via a filter.

Patent References 2 and 3 disclose wind turbine generators equipped with cooling ducts for cooling elements disposed inside the nacelle of the wind turbine generator.

Patent Reference 4 discloses a wind turbine generator according to the preamble of appended claim 1.

### Citation List

### [Patent Reference]

[Patent Reference 1] US 7,427,814
[Patent Reference 2] US 2011/0272949 A1
[Patent Reference 3] US 2010/0127502 A1
[Patent Reference 4] WO 2013/021670 A1

### Summary

### Technical Problem

In response to increase in size of a wind turbine generator, heat radiation amount from devices inside the nacelle tends to increase. In this respect, the wind turbine generator described in Patent Reference 1, the ambient air is introduced into the cooling duct via the filter. Therefore, an intake amount of the ambient air into the cooling duct becomes short due to pressure loss at the filter, and it may be difficult to obtain a sufficient cooling effect.

In view of the above issues, an object of at least one embodiment of the present invention is to provide a wind turbine generator which is capable of efficiently drawing ambient air into a duct.

### Solution to Problem

A wind turbine generator according to the present invention is defined in appended claim 1 and comprises:
a nacelle;
a device placed in the nacelle; and
a cooling duct comprising a duct inlet and a duct outlet which are provided in a wall surface of the nacelle, the cooling duct forming a duct interior space between the duct inlet and the duct outlet independently of an interior space of the nacelle;
wherein the cooling duct is configured to lead ambient air introduced directly from the duct inlet without a filter to a cooling object part of the device disposed in the duct interior space, and
wherein the duct inlet is disposed at a lower position than the cooling object part.

According to the above wind turbine generator, the duct interior space is formed between the duct inlet and the duct outlet independently of an interior space of the nacelle. Thus, the degree of cleanliness required for the duct interior space can be managed independently of the degree of cleanliness required for the interior space of the nacelle. Therefore, it is possible to omit installation of a filter in the duct interior space, and the ambient air is taken in efficiently from the duct inlet without passing through a filter. As a result, it is possible to downsize the cooling duct and increase an intake amount of the ambient air into the duct interior space. Further, although the ambient air is directly introduced from the duct inlet without a filter, as the duct inlet is disposed at a lower position than the cooling object part, it is possible to prevent the water entering the duct inlet from reaching the cooling object part. As described above, the duct interior space is configured to prevent the water from reaching the cooling object part of devices inside the nacelle and to introduce the ambient air from the duct inlet without a filter. Thus, it is possible to effectively cool the cooling object part.

In some embodiments, the wind turbine generator may further comprise:
a separator protruding from an inner wall surface of the cooling duct between the duct inlet and the cooling object part so as to block water entering the duct interior space from the duct inlet.

By providing the separator which protrudes from an inner wall surface of the cooling duct, it is possible to effectively prevent water from reaching the cooling object part without providing a filter.

According to the invention, the wind turbine generator further comprises:
a rotor configured to rotate upon receiving wind; and
a generator placed in the nacelle to convert rotational energy of the rotor into electric power,
wherein the cooling object part includes a heat radiating part of the generator.

In recent years, the amount of heat radiation from the generator is increased associated with enlargement of wind turbine generators. In the above embodiments, the ambient air is introduced directly without passing it through a filter, so as to increase the intake amount of the ambient air into the duct interior space. Thus, it is possible to effectively cool the generator whose heat radiation amount is large.

According to the invention, the wind turbine generator further comprises:
a main shaft disposed in the nacelle and connected to the rotor,
wherein the generator is disposed at a side of the main shaft between the main shaft and a side surface of the nacelle, and
wherein the duct inlet and the duct outlet are provided in the side surface of the nacelle.

In the above case where the generator is disposed at a side of the main shaft between the main shaft and a side surface of the nacelle, the duct inlet and the duct outlet are provided in the side surface of the nacelle and thus, the space at the side of the main shaft is utilized. As a result, it is possible to optimize the overall layout of the cooling duct inside the nacelle.

In some embodiments, the wind turbine generator may be configured such that
the generator has a generator shaft which extends along the main shaft, and
the cooling duct comprises: a first duct part extending upward from the duct inlet to a height of the cooling object part; and a second duct part connected to the first duct part via a bend part and extending from the bend part along the generator shaft to pass through the cooling object part.

By arranging the first duct part extending upward from the duct inlet to a height of the cooling object part, it is possible to effectively prevent water from reaching the cooling object part. Further, by arranging the second duct part connected to the first duct part via a bend part, it is possible to prevent the water from reaching the cooling object part more effectively. Furthermore, by arranging the second duct part to extend from the bend part along the generator shaft toward the cooling object part, in the case of using a generator which is long in the direction along the generator shaft, it is easy to secure sufficient heat transfer area between the cooling object part and the duct interior space and hence to enhance a cooling efficiency for the generator.

In some embodiments, the wind turbine generator further comprises:
a hydraulic pump configured to be driven by the main shaft so as to produce pressurized oil; and
a hydraulic motor having a motor shaft which is connected to the generator shaft, the hydraulic motor being configured to be driven by the pressurized oil,
wherein the hydraulic motor is disposed on a rear side of the generator in the interior space of the nacelle, and
wherein the cooling duct further comprises a third duct part which extends along the motor shaft above the hydraulic motor to connect the second duct part and the duct outlet.

In the configuration where the rotational energy of the main shaft is transmitted to the generator via the hydraulic pump and the hydraulic motor, the hydraulic pump and the hydraulic motor are connected via a hydraulic piping, instead of being directly connected in a mechanical manner. Thus, a relative position of the hydraulic motor relative to the hydraulic pump can be freely selected. As a result, the hydraulic motor and the generator can be freely arranged, regardless of the positions of the main shaft and the hydraulic pump. This makes it easy to achieve the above-described positional relationship where the generator is disposed between the main shaft and the side surface of the nacelle and the hydraulic motor is disposed on a rear side of the generator. In this case, if the duct inlet and the duct outlet are provided in the nacelle side surface, it is easy to optimize the layout of the whole cooling duct. Further, as the cooling duct further comprises a third duct part which extends along the motor shaft above the hydraulic motor to connect the second duct part and the duct outlet, the duct inlet and the duct outlet can be disposed away from each other. As a result, the space between the duct inlet and the duct outlet can be utilized to form an inlet port such as an inlet port for ventilating the interior space of the nacelle, for purposes other than cooling the generator.

In some embodiments, at least the third duct part of the cooling duct may include at least one flexible part which is deformable.

Many sorts of stresses act on the cooling duct. For instance, there are the stress accompanying bending of the outer wall of the nacelle due to the wind pressure, the stress accompanying various vibrations, and the stress applied due to installation error of the cooling duct. Further, a deforming stress of the cooling duct itself caused by heat of the exhaust gas after cooling the generator is also applied to the third duct part of the cooling duct. Therefore, as described in the above embodiments, at least the third duct part of the cooling duct is configured to include at least one flexible part which is deformable so as to absorb those stresses and also effectively prevent damage to the cooling duct.

In some embodiments, the wind turbine generator may further comprise:
a duct support part configured to support the cooling duct at both sides of each of the at least one flexible part.

As a result, the weight of the cooling duct is not loaded on the flexible part and thus, it is possible to effectively prevent damage to the flexible part.

In some embodiments, two sets of the generator, the hydraulic motor and the cooling duct may be provided on both sides of the main shaft, respectively.

As a result, compared to the case where one set of the generator, the hydraulic motor and the cooling duct is provided, it is possible to enhance the cooling efficiency for the generator and optimize the layout within the nacelle.

In some embodiments, the generator may comprise: a generator coil provided in an interior space of the generator which is spaced from the duct interior space; and a cooling rib provided in the duct interior space to form the heat radiating part.

As a result, the generator is cooled via the cooling rib disposed in the duct interior space and thus, it is possible to inhibit the corrosion of the generator coil from the ambient air, which is provided in the interior space of the generator which is spaced from the duct interior space. Particularly, in the case where the wind turbine generator is installed offshore (i.e. an offshore wind turbine generator), highly corrosive ambient air containing salt is introduced into the duct interior space. Thus, it is very beneficial to be capable of inhibiting the corrosion of the generator coil caused by the ambient air.

According to the invention, the duct outlet is disposed on a downwind side of the duct inlet, and an inlet port is provided in the wall surface of the nacelle on an upwind side of the duct outlet to draw ambient air for cooling the interior space of the nacelle.

As a result, it is possible to prevent the exhaust gas, which is heated by heat exchange with the cooling object part of the generator and is exhausted from the duct outlet, from being drawn in from the duct inlet or the inlet port for taking in the ambient air for cooling the interior space of the nacelle. Therefore, it is possible to efficiently cool the interior space of the nacelle and the generator.

In some embodiments, the wind turbine generator may further comprise a fan provided in the duct interior space to enhance an intake amount of the ambient air from the duct inlet. As a result, it is possible to enhance the cooling efficiency for the cooling object part of the generator.

In some embodiments, the wind turbine generator may further comprise a louver provided in the duct outlet, the louver being configured to open by a pressure difference between a pressure of the duct interior space and an external pressure. As a result, regardless of the disposition of the duct outlet, it is possible to prevent the water from entering the duct interior space from the duct outlet.

In some embodiments, the wind turbine generator may further comprise a silencer provided in the duct outlet. As a result, it is possible to suppress noise from the duct outlet.

According to the invention, the duct outlet is provided in a side surface of the nacelle among the wall surfaces of the nacelle. The duct outlet may be arbitrarily arranged, as described above, in accordance with disposition of other devices inside the nacelle. The inlet port is provided in the side surface of the nacelle having the duct outlet.

### Advantageous Effects

According to at least one embodiment of the present invention, the duct interior space is formed between the duct inlet and the duct outlet independently of an interior space of the nacelle and thus, it is possible to omit installation of a filter in the duct interior space, and the ambient air is taken in efficiently from the duct inlet without passing through a filter. Therefore, it is possible to downsize the cooling duct and increase an intake amount of the ambient air into the duct interior space. Further, although the ambient air is directly introduced from the duct inlet without a filter, as the duct inlet is disposed at a lower position than the cooling object part, it is possible to prevent the water entering the duct inlet from reaching the cooling object part. As described above, the duct interior space is configured to prevent the water from reaching the cooling object part of devices inside the nacelle and to introduce the ambient air from the duct inlet without a filter. Thus, it is possible to effectively cool the cooling object part.

### BRIEF DESCRIPTION OF DRAWINGS

[FIG.1]

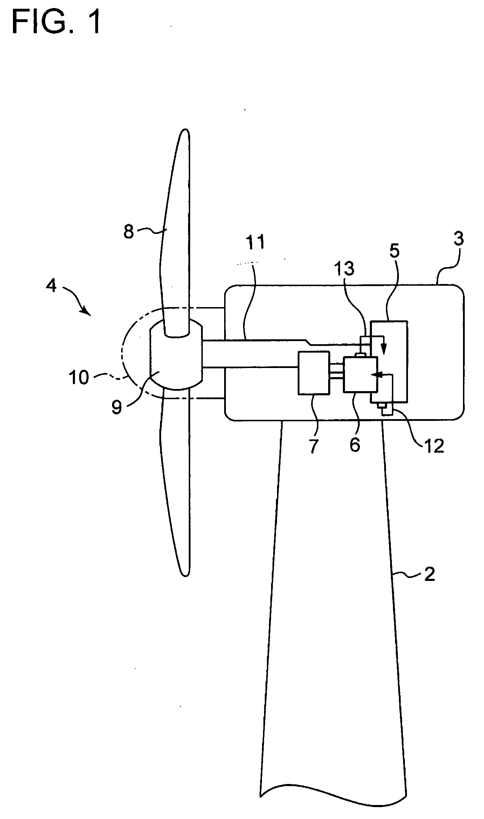

   FIG.1 is an overall illustration of a wind turbine generator according to one embodiment.
[FIG.2A]

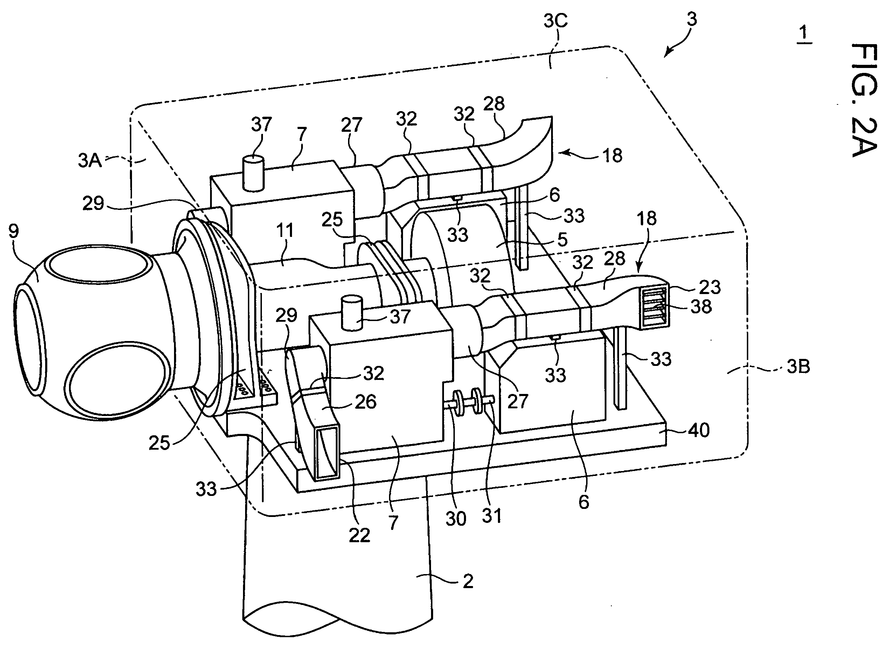

   FIG.2A is an oblique view of a particular configuration example of a wind turbine generator according to one embodiment.
[FIG.2B]

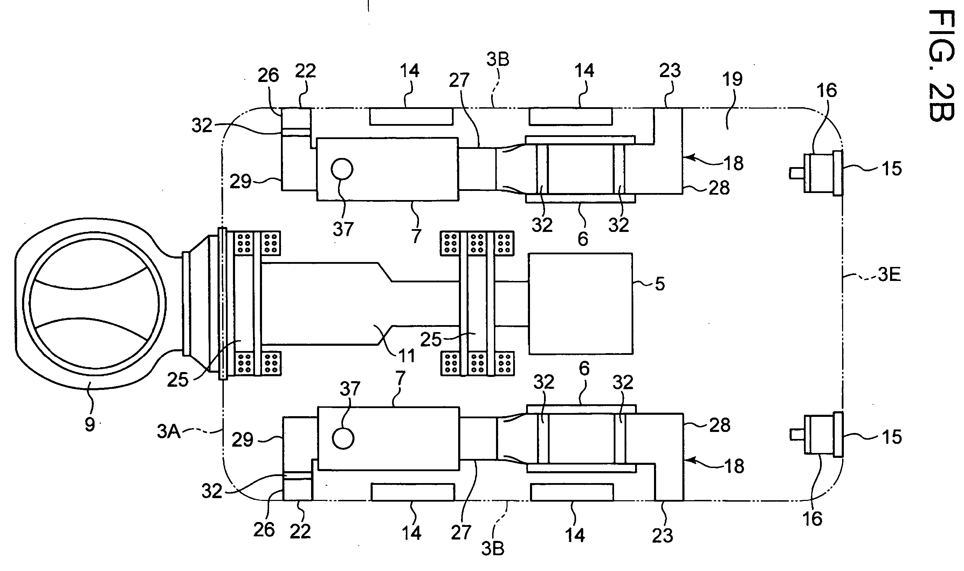

   FIG.2B is a plane view of a particular configuration example of a wind turbine generator according to one embodiment.
[FIG.2C]

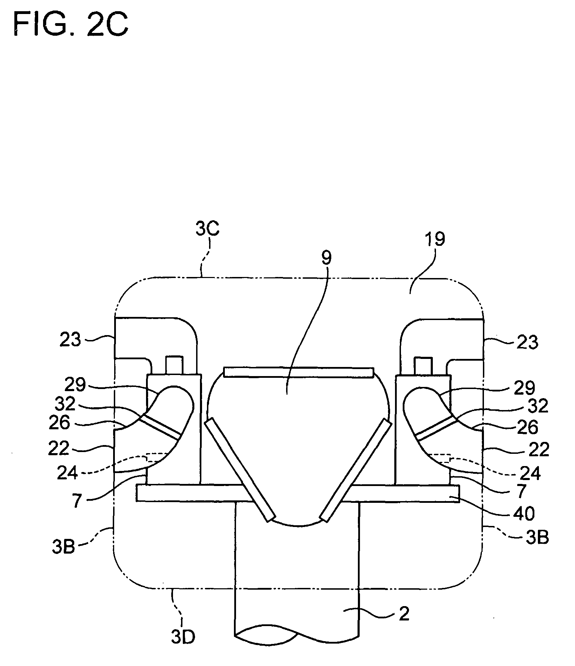

   FIG.2C is a front view of a particular configuration example of a wind turbine generator according to one embodiment.
[FIG.2D]

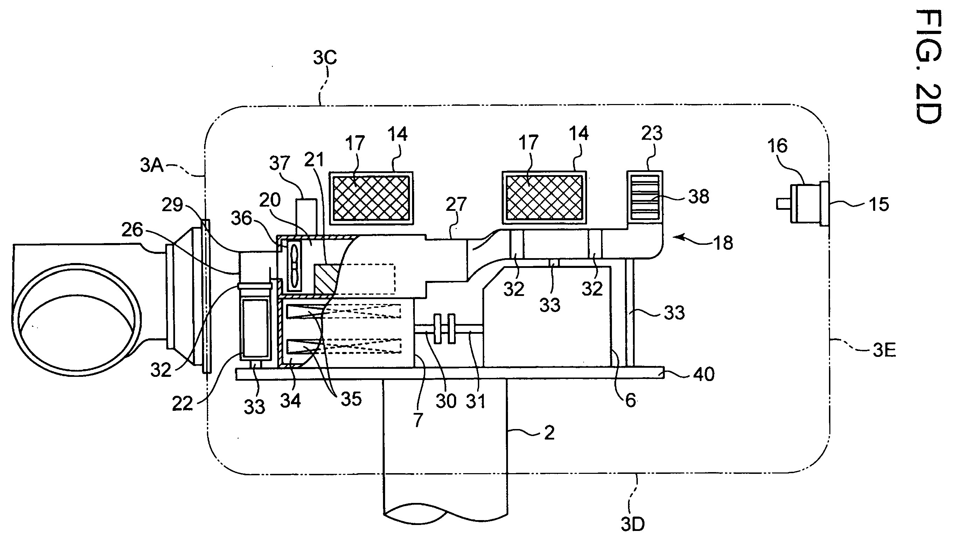

   FIG.2D is an illustration of a side surface of a particular configuration example of a wind turbine generator according to one embodiment.
[FIG.3]

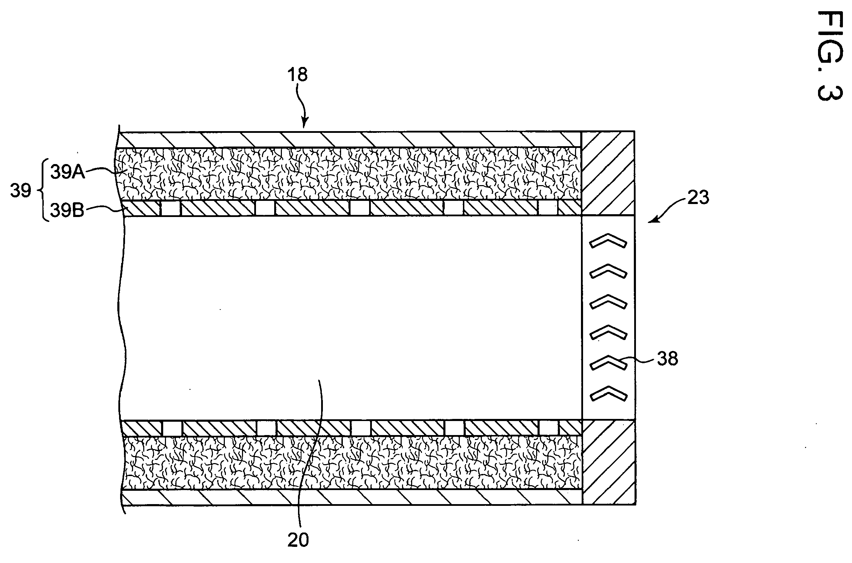

   FIG.3 is a cross-sectional view of a duct outlet according to one embodiment.
[FIG.4]

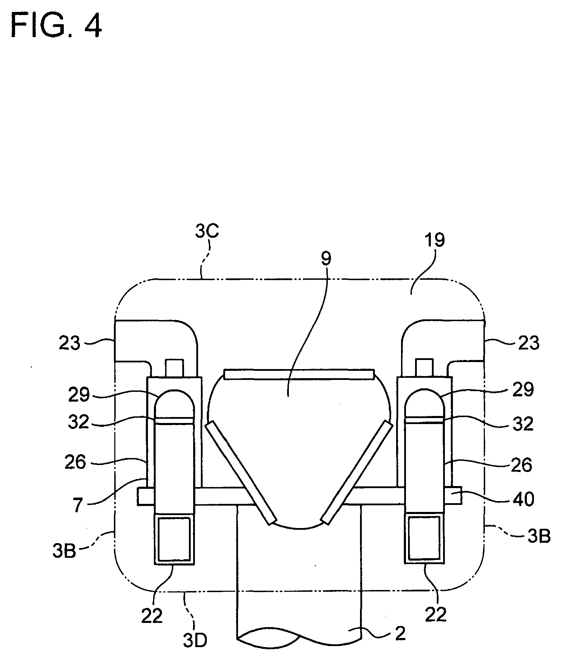

   FIG.4 is a front view of a particular configuration example of a wind turbine generator according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

FIG.1 is an illustration of a wind turbine generator according to one embodiment. A wind turbine generator 1 illustrated in FIG.1 comprises a tower 2, a nacelle disposed at an end of the tower 2, a rotor 4 configured to rotate upon receiving wind, a hydraulic pump 5 and a hydraulic motor 6 which constitute a drive train, and a generator 7 connected to the hydraulic motor 6.

In another embodiment, the rotor 4 and the generator 7 are connected via a step-up gear as a drive train. In yet another embodiment, a rotor part of the generator (a synchronous generator) 7 is directly connected to the rotor 4.

In the wind turbine generator 1, the rotor 4 is constituted by blades 8 and a hub 9. The hub 9 is covered by a hub cover (a spinner) 10. The hydraulic pump 5 is connected to the rotor 4 via a main shaft 11. The hydraulic motor 6 is connected to the hydraulic pump 5 via a high pressure oil line 12 and a low pressure oil line 13. More specifically, an outlet of the hydraulic pump 5 is connected to an inlet of the hydraulic motor 6 via the high pressure oil line 12, while an inlet of the hydraulic pump 5 is connected to an outlet of the hydraulic motor 6 via the low pressure oil line 13. The hydraulic pump 5 is driven by the main shaft 11 to pressurize operating oil, thereby generating high pressure operating oil (pressurized oil). The pressurized oil generated by the hydraulic pump 5 is supplied to the hydraulic motor 6 via the high pressure oil line 12 to drive the hydraulic motor 6. The operating oil having performed work in the hydraulic motor 6 is returned to the hydraulic pump 5 via the low pressure oil line 13 provided between the outlet of the hydraulic motor 6 and the inlet of the hydraulic pump 5.

The generator 7 is connected to the hydraulic motor 6 to convert the rotational energy of the rotor 4 into electric power. In one embodiment, the generator 7 is a synchronous generator configured to be driven by the hydraulic motor 6 and is connected to a grid. The main shaft 11, the hydraulic pump 5, and the generator 77 are arranged inside the nacelle 3.

The wind turbine generator 1 is described in details in reference to FIG.2A to FIG.2D. FIG.2A is an oblique view of a particular configuration example of a wind turbine generator 1. FIG.2B is a plane view of a particular configuration example of the wind turbine generator 1. FIG.2C is a front view of a particular configuration example of the wind turbine generator 1. FIG.2D is an illustration of a side surface of a particular configuration example of the wind turbine generator 1.

FIG.2D illustrates a partial cross-sectional view of the generator 7 and a cooling duct 18.

In the wind turbine generator 1, an inlet port 14 for taking ambient air for cooling into an interior space 19 of the nacelle 3, an exhaust port 15 for exhausting the air from the interior space 19 of the nacelle 3, and a ventilation fan 16 for enhancing ventilation of the interior space 19 of the nacelle 3 are provided in a wall surface of the nacelle 3. A filter 17 is provided in the inlet port 14 to maintain a high degree of cleanliness in the interior space 19 of the nacelle 3.

The wind turbine generator 1 further comprises the cooling duct 18 for cooling a cooling object part of devices and equipments installed in the nacelle 3. Herein, the generator 7 is described as an example of the device installed in the nacelle 3, and the cooling rib 21 which is a heat radiating part of the generator 7 is described as an example of the cooling object part. The cooling duct 18 comprises a duct inlet 22 and a duct outlet 23 which are provided in a wall surface of the nacelle 3. The cooling duct 18 forms a duct interior space 20 (see FIG.2C) between the duct inlet 22 and the duct outlet 23 independently of the interior space 19 of the nacelle 3. Further, the cooling duct 18 is configured to lead the ambient air introduced directly from the duct inlet 22 without passing through a filter to the cooling rib 21 disposed in the duct interior space 20.

As described above, in the wind turbine generator 1, the duct interior space 20 is formed between the duct inlet 22 and the duct outlet 23 independently of the interior space 19 of the nacelle 3. Thus, the degree of cleanliness required for the duct interior space 20 can be managed independently of the degree of cleanliness required for the interior space 19 of the nacelle 3. Therefore, it is possible to omit installation of a filter in the duct interior space 20, and the ambient air is taken in efficiently from the duct inlet 22 without passing through a filter. As a result, it is possible to downsize the cooling duct 18 and increase an intake amount of the ambient air into the duct interior space 20.

In the case of adopting the cooling duct which is configured to take in the ambient air directly from the duct inlet without a filter, if no measure is taken, there is a possibility that water reaches the cooling object part (the cooling rib 21) disposed in the duct interior space 20. In view of this, in the wind turbine generator 1, the duct inlet 22 is disposed at a lower position than the cooling object part (the cooling rib 21). As a result, even when the ambient air is taken in directly from the duct inlet 22 without a filter, as the duct inlet 22 is disposed at a lower position than the cooling rib 21, it is possible to prevent the water from entering the area near the cooling object part (the cooling rib 21).

Further, although the ambient air is directly introduced from the duct inlet without a filter, as the duct inlet is disposed at a lower position than the cooling object part, it is possible to prevent the water entering the duct inlet from reaching the cooling object part. As described above, the duct interior space is configured to prevent the water from reaching the cooling object part of devices inside the nacelle and to introduce the ambient air from the duct inlet without a filter. Thus, it is possible to effectively cool the cooling object part.

According to this wind turbine generator, it is possible to prevent the water from reaching the cooling object part (the cooling rib 21) and also take in the ambient air directly from the duct inlet 22 without passing through a filter. As a result, the cooling rib 21 can be cooled effectively.

In recent years, the amount of heat radiation from the generator is increased associated with enlargement of wind turbine generators. By using the above cooling duct 18, however, the ambient air is introduced directly without passing it through a filter, so as to increase the intake amount of the ambient air into the duct interior space. Thus, it is possible to effectively cool the generator whose heat radiation amount is large.

In some embodiments, a separator 24 is provided in the cooling duct 18 to block water entering the duct interior space 20 from the duct inlet 22 (see FIG.2C). The separator 24 is configured to protrude from an inner wall surface of the cooling duct 18 between the duct inlet 22 and the cooling rib 21.

By providing the separator 24 in the above manner, it is possible to effectively prevent water from reaching the cooling object part (the cooling rib 21 of the generator 7) without providing a filter in the duct interior space 20.

Further, the separator 24 may be provided at any position on the inner wall surface of the cooling duct 18. However, by providing the separator 24 such as to protrude from a lower surface of the cooling duct 18 as illustrated in FIG.2C, water invasion is prevented more effectively. The separator 24 may be provided in a continuous manner over the entire circumference of the inner wall surface of the cooling duct, or may be provided on a part of the inner wall surface of the cooling duct 18.

In the wind turbine generator 1, the generator 7 is disposed at a side of the main shaft 11 coupled to the rotor 4, between the main shaft 11 and a side surface 3B of the nacelle 3. Further, the hydraulic motor 6 is disposed on a rear side of the generator 6 in the interior space 19 of the nacelle 3. A generator shaft 30 of the generator 7 extends along the main shaft 11, and is coupled to a motor shaft 31 of the hydraulic motor 6. The duct inlet 22 and the duct outlet 23 are disposed in the side surface 3B of the nacelle 3.

In the case where the generator 7 is disposed at a side of the main shaft 11 between the main shaft 11 and the side surface 3B of the nacelle 3, by providing the duct inlet 22 and the duct outlet 23 in the side surface 3B, it is possible to utilize the space on the side of the main shaft 11. As a result, the overall layout of the cooling duct 18 in the nacelle 3 can be optimized.

Particularly, in the configuration where the rotational energy of the main shaft 11 is transmitted to the generator 7 via the hydraulic pump 5 and the hydraulic motor 6, a relative position of the hydraulic motor 6 relative to the hydraulic pump 5 can be freely selected. As a result, the hydraulic motor 6 and the generator 7 can be freely arranged, regardless of the positions of the main shaft 11 and the hydraulic pump 5. This makes it easy to achieve the above-described positional relationship where the generator 7 is disposed between the main shaft 11 and the side surface 3B of the nacelle 3 on the side of the main shaft 11.

The main shaft 11 is axially supported by a main bearing 25. The main bearing 25 is attached to a nacelle bedplate 40. The hydraulic pump 5, the hydraulic motor 6 and the generator 7 are fixed to the nacelle bedplate 40.

The cooling duct 18 is configured to include a first duct part 26, a second duct part 27 and a third duct part 28. The first duct part 26 extends in a plane which is perpendicular to the axial direction of the main shaft 11, extending upward from the duct inlet 22 toward the main shaft 11 to a height of the cooling rib 21. The second duct part 27 extends along the generator shaft 30 to pass through the cooling rib 21. The first duct part extending in the plane perpendicular to the axial direction of the main shaft 11, and the second duct part 27 extending along the generator shaft 30 are connected to each other via a bend part 29. The third duct part 28 extends along the motor shaft 31 above the hydraulic motor 6 and is configured to connect the second duct part 27 and the duct outlet 23.

With the above configuration of the cooling duct 18, it is possible to effectively prevent the water from entering the cooling rib 21 from the duct inlet 22, by means of the first duct part 26 extending upward from the duct inlet 22 to the height of the cooling rib 21. Further, as the second duct part 27 is connected to the first duct part 26 via the bend part 29, it is possible to prevent the water from reaching the cooling rib 21 more effectively. Furthermore, as the second duct part 27 extends from the bend part 29 along the generator shaft 30 to pass through the cooling rib 21, in the case of using the generator 7 which is long in the direction along the generator shaft 30, it is easy to attain sufficient heat transfer area between the cooling rib 21 and the duct interior space 20 and hence to enhance a cooling efficiency for the generator 7. As the third duct part 28 extends along the motor shaft 31 above the hydraulic motor 6 and is configured to connect the second duct part 27 and the duct outlet 23, the duct inlet 22 and the duct outlet 23 are spaced away from each other sufficiently. As a result, the space between the duct inlet 22 and the duct outlet 23 can be utilized to form an inlet port such as an inlet port 14 for ventilating the interior space 19 of the nacelle 3, for purposes other than cooling the generator 7.

The cooling duct 18 is configured to include a flexible part which is deformable. Specifically, the first duct part 26 includes one flexible part 32, and the third duct part 28 includes two flexible parts 32. Further, a duct support part 33 is provided to support the cooling duct 18 at both sides of each of the flexible part 32. A casing for the generator 7 disposed below the second duct part 27 serves as the duct support part.

Many sorts of stresses act on the cooling duct 18. For instance, there are the stress accompanying bending of the outer wall of the nacelle 3 due to the wind pressure, the stress accompanying various vibrations, and the stress generated due to installation error of the cooling duct 18. Therefore, by configuring the cooling duct 18, as described above, to include at least one flexible part 32 which is deformable, those stresses can be absorbed and also damage to the cooling duct 18 can be effectively suppressed. Particularly in the third duct part 28, in addition to the above mentioned stresses, a deforming stress of the cooling duct 18 caused by heat of the exhaust gas after cooling the generator 7 is also applied to the third duct part 28. Therefore, at least the third duct part 28 of the cooling duct 18 is configured to include at least one flexible part 32 (preferably more than one) so as to effectively prevent damage to the cooling duct 18. Further, by providing the duct support part 33 at both sides of each of the flexible pats 32, the own weight of the cooling duct 18 is not loaded on the flexible part 32 and thus, it is possible to effectively prevent damage to the flexible part 32.

In the wind turbine generator 1, two sets of the generator 7, the hydraulic motor 6 and the cooling duct 18 are provided on both sides of the main shaft 11, respectively. As a result, compared to the case where only one set of the generator 7, the hydraulic motor 6 and the cooling duct 18 is provided, it is possible to enhance the cooling efficiency for the generator 7 and optimize the layout within the nacelle 3.

Further, the generator 7 comprises a generator coil 35 disposed in a generator interior space 34 which is spaced from the duct interior space 20, and the cooling rib 21 which forms the heat radiating part and is disposed in the duct interior space 20 (see FIG.2D). As a result, cooling of the generator 7 is performed via the cooling rib 21 disposed in the duct interior space 20, and the generator coil 35 disposed in the generator interior space 34 which is spaced from the duct interior space 20 can be protected from corrosion caused by the ambient air.

In the wind turbine generator 1, the duct outlet 23 is disposed on a downwind side of the duct inlet22. Further, as illustrated in FIG.2B and FIG.2D, an inlet port 14 is provided in the wall surface 3B of the nacelle 3 on an upwind side of the duct outlet 23 to draw ambient air for cooling the interior space 19 of the nacelle 3. As a result, it is possible to prevent the exhaust gas, which is heated by heat exchange with the cooling rib 21 of the generator 7 and then exhausted from the duct outlet 23, from being drawn into the interior space 19 of the nacelle 3 from the duct inlet 22 or the inlet port 14 for taking in the ambient air for cooling the interior space 19 of the nacelle 3. Therefore, it is possible to efficiently cool the interior space of the nacelle and the generator. As a result, it is possible to efficiently cool the generator 7 and the interior space 19 of the nacelle 3.

Further, a cooling fan 36 is provided in the duct interior space 20 of the cooling duct 8 so as to enhance an intake amount of the ambient air from the duct inlet 22. As a result, it is possible to enhance the cooling efficiency for the cooling rib 21 of the generator 7.

Furthermore, the cooling fan 36 is driven by a cooling fan motor 37. The cooling fan 36 may be arranged at any position in the duct interior space 20. By arranging the cooling fan 36 in the second duct part 27, the cooling rib 21 can be cooled more effectively.

Moreover, a louver 38 is provided in the duct outlet 23. The louver 38 is configured to open when the cooling fan 36 is driven and close when the cooling fan 36 is stopped. For instance, the louver 38 is configured to open by a pressure difference between a pressure of the duct interior space 20 and an external pressure. As a result, regardless of the disposition of the duct outlet 23, it is possible to prevent the water from entering the duct interior space 20 from the duct outlet 23.

Further, a silencer 39 is provided in the duct outlet 23. The silencer 39 may be configured, as illustrated in FIG.3, by a glass wool 39A and a perforated plate 39B. As a result, it is possible to suppress noise from the duct outlet 23.

While the wind turbine generator 1 is configured such that the heat radiating part (the cooling rib 21) of the generator 7 is cooled by the cooling duct 18, the cooling object part of the device installed in the nacelle is not limited to the heat radiating part of the generator 7. For instance, the cooling object part may be a heat radiating source of the hydraulic transmission, a transformer, a converter, a control panel, etc. that are provided in the wind turbine generator. In this case, by arranging the duct inlet of the cooling duct at a lower position than the cooling object part and leading the ambient air introduced directly from the duct inlet without a filter to the cooling object, it is possible to prevent water from reaching the cooling object part and effectively cool the cooling object part.

In the above example, the duct inlet 22 and the duct outlet 23 are disposed in the side surface 3B of the nacelle 3. This is, however, not restrictive and the duct inlet 22 and the duct outlet 23 may be disposed in a place other than the side surface 2B. The duct inlet 22 may be disposed in a front surface (an upwind side surface) 3A of the nacelle 3 as illustrated in FIG.4, or may be disposed in a bottom surface 3D of the nacelle 3. In the case where the duct inlet 22 is disposed in the front surface 3A of the nacelle 3, the intake amount of the ambient air from the duct inlet 22 increases. In the case where the duct inlet is provided in the bottom surface 3D of the nacelle 3, it is possible to effectively prevent the water from entering the duct interior space 20. Moreover, the duct outlet 23 may be disposed in any of the side surface 3B, a top surface 3C, the bottom surface 3D or a rear surface 3E (a downwind side surface) of the wall surface of the nacelle 3, and may be disposed arbitrarily in accordance with dispositions of other devices inside the nacelle 3.

In the case where the duct outlet 23 is disposed in the side surface 3B or the top surface 3C of the nacelle 3 for the perspective of lowering a noise level in a base of the tower 2, the louver 38 which is configured to open by a pressure difference between a pressure of the duct interior space 20 and an external pressure may be provided in the duct outlet 23 so as to effectively prevent rain water or the like from entering from the duct outlet 23.

### Reference Signs list

- 1: Wind turbine generator
- 2: Tower
- 3: Nacelle
- 3A: Front surface
- 3B: Side surface
- 3C: Top surface
- 3D: Bottom surface
- 3E: Rear surface
- 4: Rotor
- 5: Hydraulic pump
- 6: Hydraulic motor
- 7: Generator
- 8: Blade
- 9: Hub
- 10: Hub cover
- 11: Main shaft
- 12: High pressure oil line
- 13: Low pressure oil line
- 14: Inlet port
- 15: Exhaust port
- 16: Ventilation fan
- 17: Filter
- 18: Cooling duct
- 19: Interior space of Nacelle
- 20: Duct interior space
- 21: Cooling rib (Cooling object part, Heat radiating part)
- 22: Duct inlet
- 23: Duct outlet
- 24: Separator
- 25: Main bearing
- 26: First duct part
- 27: Second duct part
- 28: Third duct part
- 29: Bend part
- 30: Generator shaft
- 31: Motor shaft
- 32: Flexible part
- 33: Duct support part
- 34: Generator interior space
- 35: Generator coil
- 36: Cooling fan
- 37: Cooling fan motor
- 38: Louver
- 39: Silencer
- 40: Nacelle bedplate

## Claims

1. A wind turbine generator (1) comprising:
a nacelle (3);
a device placed in the nacelle (3);
a cooling duct (18) comprising a duct inlet (22) and a duct outlet (23) which are provided in a wall surface of the nacelle, the cooling duct forming a duct interior space between the duct inlet (22) and the duct outlet (23) independently of an interior space (19) of the nacelle;
a rotor (4) configured to rotate upon receiving wind;
a generator (7) placed in the nacelle to convert rotational energy of the rotor into electric power; and
a main shaft (11) disposed in the nacelle and connected to the rotor;
wherein the cooling duct (18) is configured to lead ambient air introduced directly from the duct inlet without a filter to a cooling object part (21) of the device disposed in the duct interior space,
wherein the duct outlet (23) is disposed on a downwind side of the duct inlet (22),
wherein an inlet port (14) for ventilating the interior space (19) of the nacelle is provided on an upwind side of the duct outlet (23) to draw ambient air for cooling to the interior space (19) of the nacelle (3),
the wind turbine generator (1) being **characterized in that**:
the duct inlet (22) is disposed at a lower position than the cooling object part (21),
the cooling object part (21) includes a heat radiating part of the generator (7),
the duct inlet (22) and the duct outlet (23) are provided on a side surface (3B) of the nacelle (3) among the wall surfaces (3A, 3B, 3C, 3D, 3E) of the nacelle (3),
the inlet port (14) is provided on said side surface (3B) of the nacelle (3)
the generator (7) is disposed at a side of the main shaft between the main shaft (11) and said side surface (3B) of the nacelle (3).

2. The wind turbine generator according to claim 1, further comprising:
a separator (24) protruding from an inner wall surface of the cooling duct (18) between the duct inlet (22) and the cooling object part (21) so as to block water entering the duct interior space from the duct inlet.

3. The wind turbine generator according to claim 1 or 2,
wherein the generator has a generator shaft (30) which extends along the main shaft,
wherein the cooling duct comprises:
a first duct part (26) extending upward from the duct inlet (22) to a height of the cooling object part (21); and
a second duct part (27) connected to the first duct part (26) via a bend part (29) and extending from the bend part along the generator shaft to pass through the cooling object part (21).

4. The wind turbine generator according to claim 3, further comprising:
a hydraulic pump (5) configured to be driven by the main shaft (11) so as to produce pressurized oil; and
a hydraulic motor (6) having a motor shaft (31) which is connected to the generator shaft (30), the hydraulic motor being configured to be driven by the pressurized oil,
wherein the hydraulic motor (6) is disposed on a rear side of the generator (7) in the interior space of the nacelle (3), and
wherein the cooling duct further comprises a third duct part (28) which extends along the motor shaft (31) above the hydraulic motor (6) to connect the second duct part (27) and the duct outlet (23).

5. The wind turbine generator according to claim 4,
wherein at least the third duct part (28) of the cooling duct (18) includes at least one flexible part (32) which is deformable.

6. The wind turbine generator according to claim 5, further comprising:
a duct support part (33) configured to support the cooling duct (18) at both sides of each of the at least one flexible part (32).

7. The wind turbine generator according to any one of claims 4 to 6,
wherein two sets of the generator (7), the hydraulic motor (6) and the cooling duct (18) are provided on both sides of the main shaft (11), respectively.

8. The wind turbine generator according to any one of claims 1 to 7,
wherein the generator (7) comprises:
a generator coil (35) provided in an interior space of the generator which is spaced from the duct interior space; and
a cooling rib (21) provided in the duct interior space to form the heat radiating part.

9. The wind turbine generator according to any one of claims 1 to 8, further comprising:
a fan (36) provided in the duct interior space to enhance an intake amount of the ambient air from the duct inlet (22).

10. The wind turbine generator according to any one of claims 1 to 9, further comprising:
a louver (38) provided in the duct outlet (23), the louver being configured to open by a pressure difference between a pressure of the duct interior space and an external pressure.

11. The wind turbine generator according to any one of claims 1 to 10, further comprising:
a silencer (39) provided in the duct outlet (23).

## Patentansprüche

1. Windturbinengenerator (1), umfassend:
eine Gondel (3),
eine Vorrichtung, die in der Gondel (3) angeordnet ist,
einen Kühlkanal (18), der einen Kanaleinlass (22) und einen Kanalauslass (23) umfasst, die in einer Wandfläche der Gondel angeordnet sind, wobei der Kühlkanal einen Kanalinnenraum zwischen dem Kanaleinlass (22) und dem Kanalauslass (23) unabhängig von einem Innenraum (19) der Gondel bildet,
einen Rotor (4), der dafür konfiguriert ist, beim Auftreffen von Wind zu rotieren,
einen Generator (7), der in der Gondel angeordnet ist, um Rotationsenergie des Rotors in elektrische Leistung umzuwandeln, und
eine Hauptwelle (11), die in der Gondel angeordnet und mit dem Rotor verbunden ist,
wobei der Kühlkanal (18) dafür konfiguriert ist, Umgebungsluft, die direkt von dem Kanaleinlass ohne einen Filter eingeleitet wurde, zu einem Kühlobjektteil (21) der Vorrichtung zu leiten, der in dem Kanalinnenraum angeordnet ist,
wobei der Kanalauslass (23) auf einer Rückenwindseite des Kanaleinlasses (22) angeordnet ist,
wobei eine Einlassöffnung (14) zum Belüften des Innenraums (19) der Gondel auf einer Gegenwindseite des Kanalauslasses (23) angeordnet ist, um Umgebungsluft zum Kühlen des Innenraums (19) der Gondel (3) anzusaugen,
wobei der Windturbinengenerator (1) **dadurch gekennzeichnet ist, dass**:
der Kanaleinlass (22) auf einer niedrigeren Position angeordnet ist als der Kühlobjektteil (21),
wobei der Kühlobjektteil (21) einen Wärmeabstrahlungsteil des Generators (7) enthält,
der Kanaleinlass (22) und der Kanalauslass (23) von den Wandflächen (3A, 3B, 3C, 3D, 3E) der Gondel (3) an einer Seitenfläche (3B) der Gondel (3) angeordnet sind,
die Einlassöffnung (14) an der Seitenfläche (3B) der Gondel (3) angeordnet ist,
der Generator (7) auf einer Seite der Hauptwelle zwischen der Hauptwelle (11) und der Seitenfläche (3B) der Gondel (3) angeordnet ist.

2. Windturbinengenerator nach Anspruch 1, ferner umfassend:
einen Abscheider (24), der von einer Innenwandfläche des Kühlkanals (18) zwischen dem Kanaleinlass (22) und dem Kühlobjektteil (21) so hervorsteht, dass er verhindert, dass Wasser, das in den Kanalinnenraum gelangt, in den Kanaleinlass fließt.

3. Windturbinengenerator nach Anspruch 1 oder 2,
wobei der Generator eine Generatorwelle (30) aufweist, die sich entlang der Hauptwelle erstreckt,
wobei der Kühlkanal umfasst:
einen ersten Kanalteil (26), der sich von dem Kanaleinlass (22) bis auf eine Höhe des Kühlobjektteils (21) aufwärts erstreckt, und
einen zweiten Kanalteil (27), der mit dem ersten Kanalteil (26) über einen Biegeteil (29) verbunden ist und sich von dem Biegeteil entlang der Generatorwelle so erstreckt, dass er durch den Kühlobjektteil (21) verläuft.

4. Windturbinengenerator nach Anspruch 3, ferner umfassend:
eine Hydraulikpumpe (5), die dafür konfiguriert ist, durch die Hauptwelle (11) angetrieben zu werden, um druckbeaufschlagtes Öl zu erzeugen, und
einen Hydraulikmotor (6), der eine Motorwelle (31) aufweist, die mit der Generatorwelle (30) verbunden ist, wobei der Hydraulikmotor dafür konfiguriert ist, durch das druckbeaufschlagte Öl angetrieben zu werden,
wobei der Hydraulikmotor (6) auf einer Rückseite des Generators (7) im Innenraum der Gondel (3) angeordnet ist, und
wobei der Kühlkanal des Weiteren einen dritten Kanalteil (28) umfasst, der sich entlang der Motorwelle (31) über dem Hydraulikmotor (6) erstreckt, um den zweiten Kanalteil (27) und den Kanalauslass (23) zu verbinden.

5. Windturbinengenerator nach Anspruch 4,
wobei mindestens der dritte Kanalteil (28) des Kühlkanals (18) mindestens einen flexiblen Teil (32) enthält, der verformbar ist.

6. Windturbinengenerator nach Anspruch 5, ferner umfassend:
einen Kanalstützteil (33), der dafür konfiguriert ist, den Kühlkanal (18) auf beiden Seiten eines jeden des mindestens einen flexiblen Teils (32) zu stützen.

7. Windturbinengenerator nach einem der Ansprüche 4 bis 6, wobei zwei Sätze des Generators (7), des Hydraulikmotors (6) und des Kühlkanals (18) jeweils auf beiden Seiten der Hauptwelle (11) angeordnet sind.

8. Windturbinengenerator nach einem der Ansprüche 1 bis 7,
wobei der Generator (7) umfasst:
eine Generatorwicklung (35), die in einem Innenraum des Generators angeordnet ist, der von dem Kanalinnenraum beabstandet ist, und
eine Kühlrippe (21), die in dem Kanalinnenraum angeordnet ist, um den Wärmeabstrahlungsteil zu bilden.

9. Windturbinengenerator nach einem der Ansprüche 1 bis 8, des Weiteren umfassend:
ein Gebläse (36), das in dem Kanalinnenraum angeordnet ist, um eine Einlassmenge der Umgebungsluft von dem Kanaleinlass (22) zu erhöhen.

10. Windturbinengenerator nach einem der Ansprüche 1 bis 9, ferner umfassend:
eine Jalousie (38), die in dem Kanalauslass (23) angeordnet ist, wobei die Jalousie dafür konfiguriert ist, sich durch eine Druckdifferenz zwischen einem Druck des Kanalinnenraums und einem Außendruck zu öffnen.

11. Windturbinengenerator nach einem der Ansprüche 1 bis 10, ferner umfassend:
einen Schalldämpfer (39), der in dem Kanalauslass (23) angeordnet ist.

## Revendications

1. Générateur à turbine éolienne (1) comprenant :
une nacelle (3) ;
un dispositif placé dans la nacelle (3) ;
un conduit de refroidissement (18) comprenant une entrée de conduit (22) et une sortie de conduit (23) qui sont prévues dans une surface de paroi de la nacelle, le conduit de refroidissement formant un espace intérieur de conduit entre l'entrée de conduit (22) et la sortie de conduit (23) indépendamment d'un espace intérieur (19) de la nacelle ;
un rotor (4) configuré pour tourner lorsqu'il reçoit du vent ;
un générateur (7) placé dans la nacelle afin de convertir l'énergie rotative du rotor en énergie électrique ; et
un arbre principal (11) disposé dans la nacelle et raccordé au rotor ;
dans lequel le conduit de refroidissement (18) est configuré pour amener de l'air ambiant introduit directement de l'entrée de conduit sans filtre à une partie formant objet de refroidissement (21) du dispositif disposée dans l'espace intérieur de conduit,
dans lequel la sortie de conduit (23) est disposée du côté sous le vent de l'entrée de conduit (22),
dans lequel un orifice d'entrée (14) pour ventiler l'espace intérieur (19) de la nacelle est prévu du côté au vent de la sortie de conduit (23) pour aspirer l'air ambiant afin de refroidir l'espace intérieur (19) de la nacelle (3),
le générateur à turbine éolienne (1) étant **caractérisé en ce que** :
l'entrée de conduit (22) est disposée dans une position plus basse que la partie formant objet de refroidissement (21),
la partie formant objet de refroidissement (21) comprend une partie de rayonnement de chaleur du générateur (7),
l'entrée de conduit (22) et la sortie de conduit (23) sont prévues sur une surface latérale (3B) de la nacelle (3) parmi les surfaces de paroi (3A, 3B, 3C, 3D, 3E) de la nacelle (3),
l'orifice d'entrée (14) est prévu sur ladite surface latérale (3B) de la nacelle (3),
le générateur (7) est disposé d'un côté de l'arbre principal entre l'arbre principal (11) et ladite surface latérale (3B) de la nacelle (3).

2. Générateur à turbine éolienne selon la revendication 1, comprenant en outre :
un séparateur (24) faisant saillie d'une surface de paroi interne du conduit de refroidissement (18) entre l'entrée de conduit (22) et la partie formant objet de refroidissement (21) afin d'empêcher l'eau d'entrer dans l'espace intérieur de conduit à partir de l'entrée de conduit.

3. Générateur à turbine éolienne selon la revendication 1 ou 2,
dans lequel le générateur a un arbre de générateur (30) qui s'étend le long de l'arbre principal,
dans lequel le conduit de refroidissement comprend :
une première partie de conduit (26) s'étendant vers le haut à partir de l'entrée de conduit (22) jusqu'à une hauteur de la partie formant objet de refroidissement (21) ; et
une deuxième partie de conduit (27) raccordée à la première partie de conduit (26) via une partie pliée (29) et s'étendant à partir de la partie pliée le long de l'arbre de générateur afin de traverser la partie formant objet de refroidissement (21).

4. Générateur à turbine éolienne selon la revendication 3, comprenant en outre :
une pompe hydraulique (5) configurée pour être entraînée par l'arbre principal (11) afin de produire de l'huile sous pression ; et
un moteur hydraulique (6) ayant un arbre de moteur (31) qui est raccordé à l'arbre de générateur (30), le moteur hydraulique étant configuré pour être entraîné par l'huile sous pression,
dans lequel le moteur hydraulique (6) est disposé sur un côté arrière du générateur (7) dans l'espace intérieur de la nacelle (3), et
dans lequel le conduit de refroidissement comprend en outre une troisième partie de conduit (28) qui s'étend le long de l'arbre de moteur (31) au-dessus du moteur hydraulique (6) pour raccorder la deuxième partie de conduit (27) et la sortie de conduit (23).

5. Générateur à turbine éolienne selon la revendication 4,
dans lequel au moins la troisième partie de conduit (28) du conduit de refroidissement (18) comprend au moins une partie flexible (32) qui est déformable.

6. Générateur à turbine éolienne selon la revendication 5, comprenant en outre :
une partie de soutien de conduit (33) configurée pour soutenir le conduit de refroidissement (18) au niveau des deux côtés de chacune de la au moins une partie flexible (32).

7. Générateur à turbine éolienne selon l'une quelconque des revendications 4 à 6,
dans lequel deux ensembles composés du générateur (7), du moteur hydraulique (6) et du conduit de refroidissement (18), sont prévus des deux côtés de l'arbre principal (11), respectivement.

8. Générateur à turbine éolienne selon l'une quelconque des revendications 1 à 7,
dans lequel le générateur (7) comprend :
une bobine de générateur (35) prévue dans un espace intérieur du générateur qui est espacé de l'espace intérieur de conduit ; et
une nervure de refroidissement (21) prévue dans l'espace intérieur de conduit afin de former la partie de rayonnement de chaleur.

9. Générateur à turbine éolienne selon l'une quelconque des revendications 1 à 8, comprenant en outre :
un ventilateur (36) prévu dans l'espace intérieur de conduit afin d'augumenter une quantité d'admission de l'air ambiant à partir de l'entrée de conduit (22).

10. Générateur à turbine éolienne selon l'une quelconque des revendications 1 à 9, comprenant en outre :
une persienne (38) prévue dans la sortie de conduit (23), la persienne étant configurée pour s'ouvrir par une différence de pression entre une pression de l'espace intérieur de conduit et une pression externe.

11. Générateur à turbine éolienne selon l'une quelconque des revendications 1 à 10, comprenant en outre :
un silencieux (39) prévu dans la sortie de conduit (23).
